Europäisches Patentamt

European Patent Office

Office européen des brevets

(11) Veröffentlichungsnummer: **0 203 430**
**B1**

(12) **EUROPÄISCHE PATENTSCHRIFT**

(45) Veröffentlichungstag der Patentschrift:
**17.01.90**

(51) Int. Cl.⁴: **B01D 53/34**

(21) Anmeldenummer: 86106291.7

(22) Anmeldetag: 07.05.86

(54) Verfahren und Anlage zur Reinigung von Rauchgas.

(30) Priorität: 07.05.85 DE 3516419

(43) Veröffentlichungstag der Anmeldung:
03.12.86 Patentblatt 86/49

(45) Bekanntmachung des Hinweises auf die Patenterteilung:
17.01.90 Patentblatt 90/3

(84) Benannte Vertragsstaaten:
AT BE CH DE FR GB IT LI LU NL SE

(56) Entgegenhaltungen:
EP-A- 0 103 881
EP-A- 0 141 802
DE-A- 2 548 576
DE-A- 3 136 914
US-A- 2 600 871

(73) Patentinhaber: Phoenix Gesellschaft für
Rauchgasreinigung und Umwelttechnik mbH, Auf der
Point 12 Postfach 1228, D-8460 Schwandorf(DE)

(72) Erfinder: Bach, Hans Friedrich, Dr.-Ing., Parkstrasse 35,
D-8023 Pullach(DE)
Erfinder: Jahn, Stephan, Wieselweg 15, D-8013 Haar(DE)
Erfinder: Pergande, Wilfried, Dipl.-Ing.,
Mucherstrasse 8 Postfach 94 01 23, D-5000 Köln 91(DE)

(74) Vertreter: Lesser, Karl-Bolko, Dipl.-Ing., European
Patent Attorney Johanneskirchnerstrasse 149a,
D-8000 München 81(DE)

ACTORUM AG

## Beschreibung

Die Erfindung betrifft ein Verfahren und eine Anlage zur Reinigung von Rauchgas gemäß Oberbegriff des Anspruches 1 bzw. des Anspruches 7.

Die Reinigung der Rauchgase aus Feuerungsanlagen wird insbesondere in letzter Zeit aus Gründen des Umweltschutzes immer notwendiger. Aus Feuerungsanlagen kommende Rauchgase stellen eine große Belastung für die Umwelt dar. In diesen Rauchgasen sind unter anderem Stäube, wie Flugasche, Ruß und Schwermetalle, und gasförmige Schadstoffe, wie Schwefeldioxid, Schwefeltrioxid, Chlorwasserstoff, Stickstoffoxide, gasförmige Schwermetalle usw., enthalten, die mit diesen Rauchgasen über den Kamin der Feuerungsanlage in die Umgebungsluft abgeführt werden. Großfeuerungsanlagen haben nun zwar schon Kamine, die zum Teil weit über 100 m hoch sind. Dies führt aber nur dazu, daß die umweltschädlichen Bestandteile der Rauchgase in höhere· Luftschichten gebracht werden und mit diesen in auch weit entfernte Gebiete gelangen.

Es ist heute schon selbstverständlich, daß Rauchgasreinigungsanlagen ein Entstaubungssystem enthalten, welches einen großen Teil der festen Bestandteile herausfiltert.

Die Beseitigung der gasförmigen und deshalb schädlicheren Bestandteile bereitet allerdings noch einige Probleme.

Bei der Beseitigung der gasförmigen Bestandteile unterscheidet man im wesentlichen drei verschiedene Verfahren:

1. das sogenannte "Naß"-Verfahren,
2. das sogenannte "Halbtrocken"-Verfahren, und
3. das sogenannte "Trocken"-Verfahren.

Beim Naß-Verfahren werden die Rauchgase mit einer Waschflüssigkeit, wie z.B. wäßrige Lösungen von Calciumcarbonat, Calciumoxid, Calciumhydroxid, Ammoniak od.dgl., in Kontakt gebracht, in der sich die gasförmigen Schadstoffe lösen und chemisch binden. Die mit Schadstoffen beladene Flüssigkeit muß in weiteren Verfahrensschritten, wie Zentrifugieren, Filtrieren, Trocknen, zu einem festen Reaktionsprodukt, wie z.B. Gips, verarbeitet werden. Solche Naß-Verfahren sind beschrieben in: DE-A 3 232 077, DE-C 2 607 587, DE-C 2 622 197, DE-C 3 227 187, DE-A 3 227 046, DE-C 2 803 764 und DE-C 2 708 919.

Beim Halbtrocken-Verfahren werden die Rauchgase mit einer versprühten Additivlösung, wie z.B. in Wasser gelöstes Kalkhydrat, in Kontakt gebracht. Hierbei reagieren die gasförmigen Schadstoffe mit dem gelösten Additiv. Die deutlich über 100°C heißen Rauchgase trocknen gleichzeitig die Tröpfchen der Lösung ein. Den Reaktor, z.B. einen Sprühtrockner, verlassen dann ein trockenes, staubförmiges Reaktionsprodukt und die von den gasförmigen Schadstoffen weitgehend befreiten Rauchgase, die nunmehr nur noch 70 bis 80°C heiß sind. Solche Halbtrocken-Verfahren sind beschrieben in: DE-C 2 928 526, DE-B 2 905 719 und EP-A 0 005 301.

Beim trockenen Rauchgasreinigungsverfahren wird ein trockenes, feinteiliges Additiv, wie z.B. Calciumcarbonat- oder Calciumhydroxidpulver, in den Rauchgasstrom eingebracht. Hier reagieren die gasförmigen Schadstoffe mit dem Additiv. Solche Verfahren sind beschrieben in: DE-A 3 232 080, DE-A 3 330 331, DE-A 3 332 928, DE-C 3 306 795, DE-C 2 550 190, DE-C 2 439 234, DE-C 2 319 532, EP-A 0 104 335, EP-A 0 103 881, EP-A 0 102 473, EP-A 0 072 993, EP-A 0 029 564, EP-B 0 008 770 und CH-A 559 573.

Nasse Verfahren verwenden als Flugascheabscheider meist ein Elektrofilter, das der nassen Rauchgasreinigung vorgeschaltet ist.

Bei halbtrockenen und trockenen Verfahren ist manchmal ein Flugasche-Vorabscheider, wie z.B. Elektrofilter oder Schlauchfilter, stets jedoch ein dem Reaktor nachgeschalteter Staubabscheider erforderlich. Hierfür ist ein Schlauchfilter zu bevorzugen, da dieses eine Nachreaktion herbeiführt und eine bessere Staubabscheidung ermöglicht.

Bei nassen und halbtrockenen Rauchgasreinigungsanlagen können heute Entschwefelungswirkungsgrade von über 90% erreicht werden, während die trockenen Verfahren zur Zeit maximal 60% erreichen. Lediglich in Müllverbrennungsanlagen können mit der trockenen Rauchgasreinigung Wirkungsgrade, bezogen auf die Entfernung von Chlorwasserstoff, von über 90% erzielt werden.

Im Rahmen der trockenen Rauchgasreinigung sind folgende Einzelmaßnahmen als bekannt anzusehen:

Trockene Verfahren beanspruchen gegenüber den nassen und halbtrockenen Verfahren eine größere Verweilzeit. Die Reaktion kann aber durch die Zugabe von Wasser verbessert werden (EP-A 0 104 335).

Daß die Reaktion durch intensive Vermischung und Erhöhung der Relativgeschwindigkeiten erhöht werden kann, wird in der EP-A 0 029 564 beschrieben, in der zur Reaktionsverbesserung vorgeschlagen wird, Schall auf die Reaktionspartner einwirken zu lassen.

In der DE-A 3 232 080 wird beschrieben, daß durch teilweise äußere Rückführung der abgeschiedenen Feststoffe vor den Reaktor eine Additiveinsparung erreicht werden kann.

Verschiedene Additive, wie alkalische Additive, z.B. Calciumcarbonat, Calciumoxid, Calciumhydroxid, kohlenstoffhaltige Additive und Metalloxide, werden in der DE-C 2 550 190 und der DE-X 3 306 795 beschrieben.

Auch ist es als solches bekannt, daß durch Nachschaltung eines Schlauchfilters nach den Reaktor eine Verbesserung des Wirkungsgrades durch Nachreaktion im Filter erreicht werden kann.

Es wurden auch schon zur Verbesserung des Stoffaustausches Reaktoren mit starren Schikanen ausgerüstet, die jedoch schon nach kurzer Betriebszeit hohe Druckverluste erzeugten und manchmal auch zu einem vollkommen verstopften Reaktor führten.

Aus der EP-A 0 141 802 ist ein Verfahren und eine Anlage zur Reinigung von Rauchgasen bekannt, bei dem die heißen Gase durch eine Schüttung von mit einer Beschichtung überzogenen Körpern in einem Reaktor geführt werden, wobei die Beschichtungen eine große Affinität zu Schwefel und Schadstoffen aufweist. Dieser Reaktor ist ein Kugelhaufen-Reaktor. Die Gase und die beschichteten Körper werden dabei im Gegenstrom durch den Reaktor geführt.

Nachdem die beschichteten Körper den Reaktor unten durch einen Ausgang verlassen haben, wird die Beschichtung abgetragen und eine neue Beschichtung aufgetragen. Die Durchlaufgeschwindigkeit der beschichteten Körper durch den Reaktor ist entsprechend der Zusammensetzung und Konzentration der Schadstoffe in der Zuleitung und der Ableitung regelbar.

Nach dem Abreiben der Beschichtung wird das abgeriebene Material über ein Gebläse einem Zyklon und/oder Staubfilter zugeführt und dort abgeschieden. Das zu reinigende Gas wird mittels eines regelbaren Abzugsorgans aus dem Reaktor abgeführt.

Der Reaktor ist vertikal stehend aufgebaut, wobei die beschichteten Körper oben durch die Reaktorwandung eingebracht und unten aus einem Kegel mittels einer Austragsschnecke abgezogen werden, während das zu reinigende Gas unten durch die Reaktorwandung zugeführt und das gereinigte Gas oben durch den Reaktordeckel abgezogen wird.

Das Aufbringen der Beschichtung auf die Körper und das Entfernen der Beschichtung von den Körpern ist sehr energie-intensiv, weshalb dieses Verfahren und die Anlage im Betrieb recht teuer sind. Auch muß sich – wie bei allen Festbettreaktoren – immer ein sehr großer Überschuß an Reaktionsmaterial – hier die beschichteten Körper – im Reaktor befinden.

Aus der US-A 2 600 871 ist ein Verfahren und eine Anlage zur Reinigung von Fluiden, wie Gasen, bekannt. Der dort benutzte Reaktor weist eine horizontal angeordnete Achse auf, um die eine Förderschnecke drehbar gelagert ist, die das feste Reaktionsmaterial bewegt und um die das zu behandelnde Gas geleitet wird.

Dieser Reaktor ist mit partikelförmigem Reaktionsmaterial gefüllt, welches weit über die Hälfte des freien Reaktorvolumens einnimmt und in der Achse des Reaktor durch einen Eintrittsstutzen zugeführt und durch einen Austrittsstutzen aus dem Reaktor abgeführt werden kann. Der Austritt des partikelförmigen Reaktionsmaterials ist über ein Ventil regelbar, sodaß der Reaktor je nach Regelzustand mit mehr oder weniger Reaktionsmaterial gefüllt ist.

Durch die gleichen Öffnungen im Reaktor wird auch das zu reinigende bzw. gereinigte Gas zu- und abgeführt. Es kann dabei im Gleichstrom oder im Gegenstrom gefahren werden. Das Gas wird dabei durch einen kleineren Stutzen in den einen Stutzen eingeblasen und durch einen weiteren kleineren Stutzen aus dem anderen Stutzen abgeführt. Insbesondere damit das Gas beim Abführen kein partikelförmiges Reaktionsmaterial mitführt, darf dieses Reaktionsmaterial nicht fluidisieren. Das Gas wird nun um die Schnecke herumgeführt und muß somit immer wieder durch das partikelförmige Reaktionsmaterial hindurch. Dabei tritt ein großer Druckverlust auf.

Es handelt sich auch hier um einen Festbettreaktor, weshalb auch hier der Reaktor mit einem großen Überschuß an Reaktionsmaterial geladen ist.

Bei beiden bekannten Verfahren und Anlagen tritt das Gas mit dem Reaktionsmaterial im wesentlichen nur im Reaktor in Kontakt. Ein inniges Gemisch von Additiv und Rauchgas liegt in keinem der beiden Reaktoren vor, da es sich bei beiden Reaktoren um Festbett-Reaktoren mit nichtfluidisierenden Materialien handelt. Es wird jeweils mit einem sehr großen Additivüberschuß gearbeitet, da der Reaktor vollständig bzw. zum größten Teil mit Reaktionsmaterial gefüllt ist. Bei beiden bekannten Verfahren und Anlagen ist der Wirkungsgrad insbesondere bezogen auf die eingesetzte Menge an festem Reaktionsmaterial nicht sehr groß.

Es ist ersichtlich, daß schon vielfältige Versuche unternommen wurden, um den Wirkungsgrad bei der Rauchgasreinigung zu erhöhen.

Ein Wirkungsgrad, wie bei Naß- oder Halbtrocken-Verfahren konnte jedoch bisher bei Trocken-Verfahren nicht erreicht werden.

Der Erfindung liegt die Aufgabe zugrunde, ein Verfahren und eine Anlage zur Reinigung von Rauchgas zu schaffen, mit denen der Wirkungsgrad wesentlich erhöht werden kann. Diese Aufgabe wird durch die Erfindung gelöst.

Bei dem erfindungsgemäßen Verfahren zur Reinigung von Rauchgas, welches von einer Feuerungsanlage zugeführt wird, wobei das Rauchgas mindestens mit einem Additiv in einem Reaktor reagiert und das Verhältnis der Verweilzeit des Additivs im Reaktor zur Verweilzeit des Rauchgases im Reaktor geregelt und/oder gesteuert wird, wird das Rauchgas mit einem pulverförmigen Additiv im stöchiometrischen Verhältnis von maximal 1:3 dosiert gemischt dem Reaktor zugeführt.

Es wird also von der Einsetzung eines großen Feststoff-Überschusses, wie er in Festbett-Reaktoren wie denen der EP-A 0 141 802 und der US-A 2 600 871 notwendig ist, abgegangen und das eingesetzte Additiv auf ein Minimum reduziert. Das Additiv wird dagegen in Pulverform eingesetzt und schon vor dem Zuführen zum Reaktor mit dem zu behandelnden Rauchgas dosiert gemischt. Das Additiv liegt jetzt fluidisiert vor.

Je nach Menge des zugeführten Rauchgases, welches bei Feuerungsanlagen unregelmäßig und mit verschieden hohen Schadstoffanteilen anfallen kann, nach Feinheit der Additivteilchen und nach Feuchte des Stoffgemisches wird die Verweilzeit des Additivs gesteuert.

So kann die Verweilzeit des Additivs im Reaktor größer oder kleiner sein, als die Verweilzeit des Rauchgases im Reaktor. Bei den eingangs beschriebenen Rauchgas-Reinigungsverfahren wird in der Regel mit einem stöchiometrischen Verhältnis zwischen Additiv und Rauchgas von 3:1 gefahren, also mit einem großen Additivüberschuß. Aufgrund der regelbaren Steuerung des Verhältnisses der Verweilzeit kann der stöchiometrische Additivüberschuß verringert werden.

Insbesondere, wenn das Verhältnis der Verweilzeit größerer Additivteilchen im Reaktor gegenüber der Verweilzeit kleinerer Additivteilchen im Reaktor geregelt und/oder gesteuert wird, wenn z.B. die Verweilzeit gröberer, langsam reagierender Additivteilchen größer ist, als die Verweilzeit feinerer, schneller reagierender Additivteilchen, kann der Additivüberschuß noch verkleinert und der Wirkungsgrad der Reaktion erhöht werden. Die Verweilzeit der feineren Additivteilchen läßt sich, da diese größtenteils vom Rauchgas mit gleicher Geschwindigkeit mitgenommen werden, gegenüber der Verweilzeit des Rauchgases nur gering steuern. Gröbere Additivteilchen sollen jedoch relativ unabhängig vom Rauchgasstrom durch den Reaktor gefördert werden. Dadurch wird erreicht, daß langsamer abreagierende, gröbere Teilchen, auch langsamer den Reaktor durchströmen, als schneller abreagierende, feinere Teilchen.

Eine weitere Erhöhung des Wirkungsgrades des Verfahrens läßt sich erzielen, wenn das Additiv im Reaktor nochmals intensiv mit dem Rauchgas vermischt wird, was durch Einbauten im Reaktor erreicht werden kann, die dem Additiv einen anderen Widerstand entgegenbringen, als dem Rauchgas.

Das aus dem Reaktor austretende Stoffgemisch aus Rauchgas, Additiv, Reaktionsprodukten und gegebenenfalls weiteren Feststoffen, wie Flugasche od.dgl., wird einem Abscheider zugeführt, in dem die Feststoffe von dem Gas abgeschieden werden. Vorteilhafterweise wird dazu ein Schlauchfilter verwendet, da sich zumindest ein Teil des Additivs an den Filterschläuchen ansetzt, die von dem Rauchgas durchströmt werden müssen. Bei diesem Durchströmen kommt es zu einer Nachreaktion, wodurch der Wirkungsgrad des Verfahrens weiter erhöht werden kann.

Das gereinigte Gas wird dann einem Kamin zugeführt, wobei vorzugsweise zwischen dem Abscheider und dem Kamin ein Gebläse angeordnet ist.

Die erfindungsgemäße Anlage zur Reinigung von Rauchgas, welches von einer Feuerungsanlage zugeführt wird, bei der das Rauchgas in einem Reaktor mindestens mit einem Additiv reagiert, ist dadurch gekennzeichnet, daß der Reaktor vertikal stehend ausgebildet ist und im Reaktor sich gegenüber dem Reaktorbehälter bewegende Einbauten angeordnet sind. Diese Einbauten, die vorzugsweise bei einem zylinderförmigen Reaktorbehälter an einer axial angeordneten Welle festgelegt sind, können verschieden ausgebildet sein.

Gemäß einer Ausführungsform der Erfindung ist an der Welle eine durchgehende Schnecke angeordnet, die bis fast an die Seitenwandung des Behälters reicht. Hierbei wird das Rauchgas und das Additiv zwischen den einzelnen Wendeln der Schnecke spiralförmig durch den Reaktor geführt. Während die feineren Additivteilchen mit dem Gasstrom fast mit gleicher Geschwindigkeit mitgezogen werden, lagert sich ein Teil der gröberen Additivteilchen auf den Wendeln der Schnecke ab. Je nachdem, ob die Schnecke nun gegen den spiralförmigen Rauchgasstrom oder mit diesem dreht, werden die gröberen Additivteilchen nun in ihrer Relativbewegung gegenüber dem Gasstrom verlangsamt oder beschleunigt. Wird der Gasstrom entgegen den auf der drehenden Schnecke aufliegenden Additivteilchen geführt, so wirbelt der Gasstrom, wenn der Gasdurchsatz groß ist, die Teilchen auf, was zu einer sehr guten Vermischung derselben mit dem Gasstrom führt. Ist der Gasstrom dagegen relativ klein, so sollte die Schnecke im Gleichstrom mit dem Gasstrom geführt werden, allerdings mit einer Drehgeschwindigkeit, die größer ist, als die "Drehgeschwindigkeit" des Gasstromes. Auch hierbei werden die gröberen Additivteilchen aufgewirbelt und vermischen sich intensiv mit dem Gas. Aufgrund ihres Gewichtes sinken sie jedoch im Gasstrom ab und fallen wieder auf die Schnecke, jedoch, da die Schnecke sich gedreht hat, auf ein tieferes Höhenniveau.

Bei dieser Ausbildung des Reaktors kann bei vertikal stehender, die durchgehende Schnecke tragender Welle die Zufuhr des Gas-Additiv-Gemisches unten und die Abfuhr desselben oben im Reaktor oder auch umgekehrt erfolgen. Insbesondere bei einer Zuführung des Gemisches am unteren Ende des Reaktors ist jedoch bei den Relativgeschwindigkeiten zwischen Gasstrom und Additiv einerseits und dem Gasstrom-Additiv-Gemisch und der drehenden Schnecke anderseits darauf zu achten, daß durchschnittlich genauso viel Additiv zugeführt wird, wie abgeführt wird. Es ist aber bei einer Ausführungsform auch möglich, unten im Reaktor eine Abführeinrichtung für überschüssiges Additiv anzuordnen.

Gemäß einer anderen Ausführungsform des Reaktors besitzt der Reaktorbehälter in seinem Inneren feste Einbauten, die an der Innenwandung des Behälters festgelegt sind. Damit sich aber auf diesen Einbauten nicht zu viel Additiv ansammelt und damit eine Relativgeschwindigkeit zwischen Additiv und Gasstrom erhalten wird, sind zwischen den festen Einbauten bewegliche Einbauten vorgesehen, die vorzugsweise auch an einer drehenden Welle angeordnet sind. Sind als feste Einbauten horizontale Siebböden, Lochplatten, bzw. Segmente davon, angeordnet, so reicht es aus, daß die beweglichen Einbauten aus an der drehbaren Welle angeordneten, senkrechten oder leicht schräg gestellten Wischern bestehen, die das auf den Einbauten abgelagerte Additiv immer wieder aufwirbeln. Diese Wischer können eine Höhe aufweisen, die nur einem Teil des senkrechten Abstandes zwischen zwei festen Einbauten entspricht. Es können aber auch Wischer benutzt werden, die jeweils oben auf einem festen Einbau und unten an dem darüberliegenden festen Einbau entlangstreifen. Bei dieser Ausbildung empfiehlt es sich, das Additiv-Gas-Gemisch von oben in den Reaktor einzugeben und unten abzuführen.

Die zwischen den horizontalen, festen Einbauten angeordneten beweglichen Einbauten können aber auch an der Welle festgelegte Schneckenabschnitte sein, die sich über die gesamte Höhe zwischen zwei festen Einbauten erstrecken.

Die festen Einbauten können gemäß einem weiteren Vorschlag auch aus schräg gestellten Blechen gebildet werden, während die beweglichen Einbauten auch schräg gestellte, an einer Welle festgelegte Bleche sind, deren Schrägung aber senkrecht zu der Schrägung der festen Bleche ausgerichtet ist, sodaß sich eine Ausbildung ähnlich wie in einer Turbine ergibt.

Die Einbauten können aber auch durch Hohlkörper mit Öffnungen gebildet werden, durch die Druckluft in den Reaktor einblasbar ist.

Mehrere solcher Reaktoren können sowohl seriell, als auch parallel, als auch parallel und seriell geschaltet sein. Jedem der Parallel geschalteten Reaktoren bzw. Reaktorenreihen kann eine eigene Additiv-Dosiervorrichtung und / oder ein eigener Abscheider zugeordnet sein.

Weitere Einzelheiten und Vorteile der Erfindung ergeben sich aus des Unteransprüchen und aus im Folgenden anhand der Zeichnung beschriebenen Ausführungsbeispielen.

Es zeigt:

Figur 1 eine Prinzipskizze einer Anlage zur Rauchgasreinigung in schematischer Darstellung mit einem Reaktor gemäß einer ersten Ausführungsform;

Figur 2 einen in dieser Anlage verwendeten Reaktor gemäß einer zweiten Ausführungsform in vergrößerter, schematischer Darstellung, und

Figur 3 einen Reaktor analog Figur 2 gemäß einer dritten Ausführungsform.

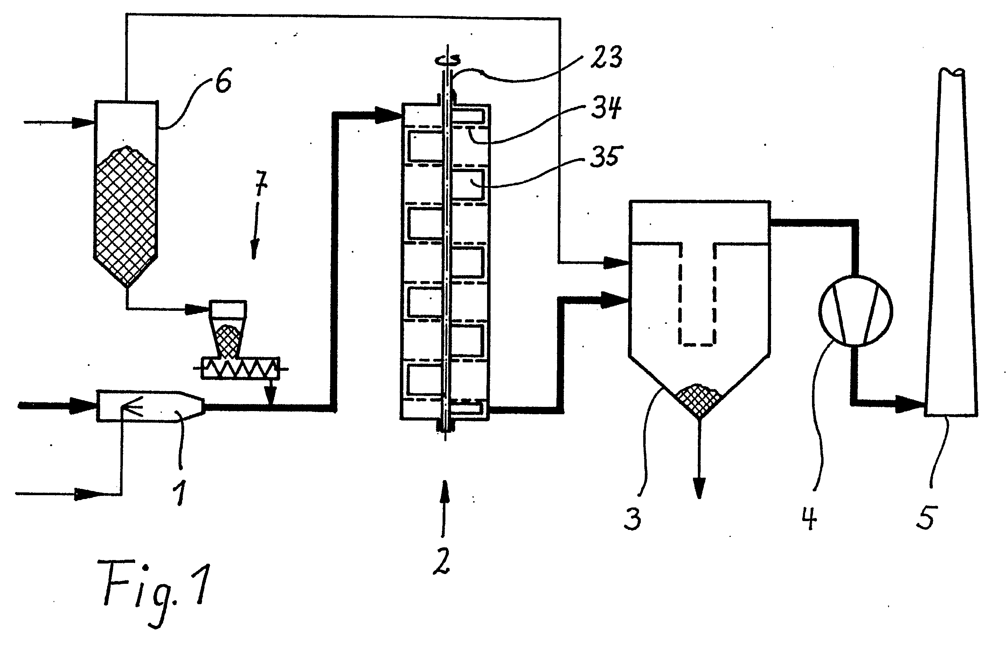

Gemäß Figur 1 wird der von einer nicht dargestellten Feuerungsanlage kommende Rauchgasstrom einer Mischdüse 1 zugeführt, in der der Rauchgasstrom mit einer Kühlflüssigkeit, z.B. mit Wasser, intensiv vermischt wird. Diese Mischdüse 1 kann eine Venturidüse sein. Die fein versprühte Kühlflüssigkeit wird durch das in der Regel über 200°C bis 400°C heiße Rauchgas verdampft. Hierbei kühlt sich das Rauchgas auf die gewünschte Reaktionstemperatur ab. Durch die Erhöhung des Wasserdampfgehaltes im Rauchgas werden gleichzeitig bessere Reaktionsbedingungen zwischen den Schadstoffen und einem Additiv geschaffen.

Anschließend wird dem Rauchgas Trockenadditiv in Pulverform beigemischt und das Gemisch einem Reaktor 2 zugeführt. Bei dem Trockenadditiv kann es sich um Kalkhydrat, Magnesiumoxid und weitere meist alkalische, schadgasbindende Additive handeln.

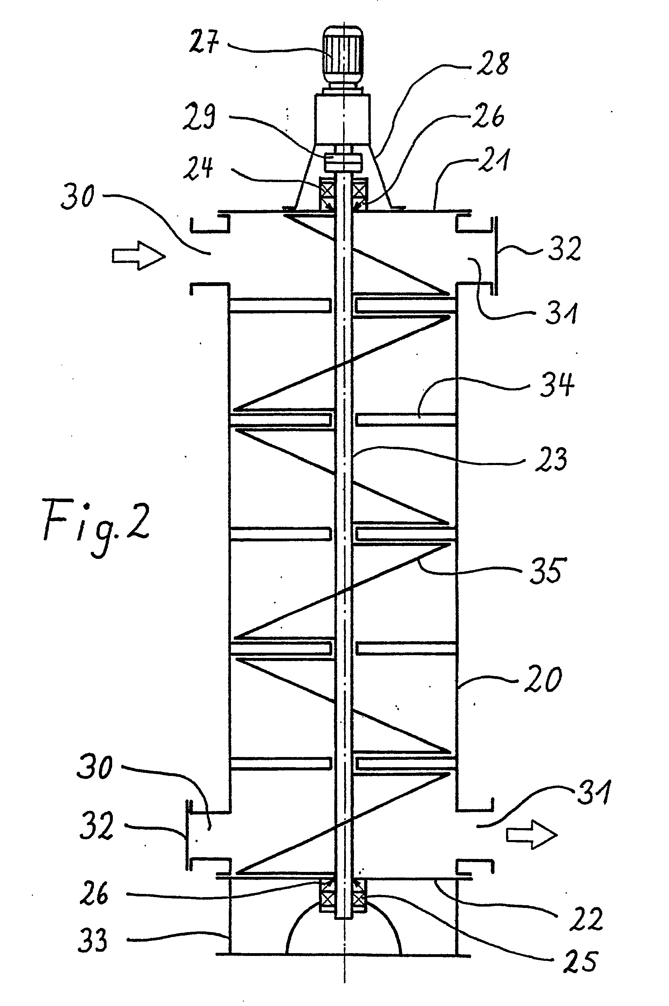

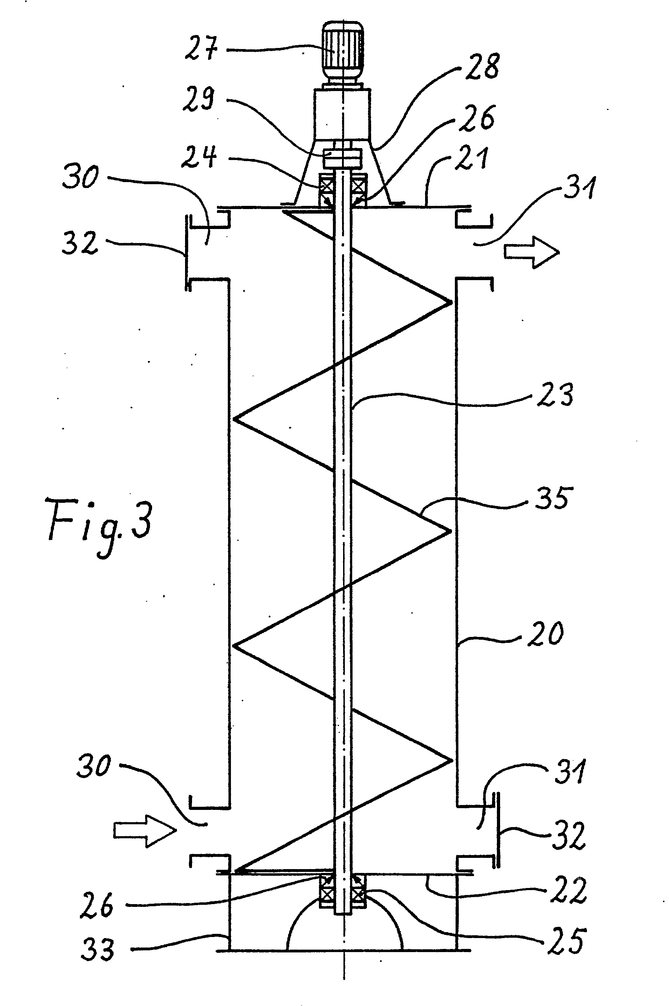

In dem Reaktor 2, auf den unten, insbesondere auch im Zusammenhang mit Figuren 2 und 3 noch näher eingegangen wird, reagieren die Rauchgase mit dem Additiv. Der Reaktor 2 hat dabei die Aufgabe, der nach Zugabe des Additivs zu dem Rauchgas einsetzenden Reaktion genügend Verweilzeit zur Verfügung zu stellen und die Vorgänge des Stofftransportes, der Diffusion, der Adsorption und der chemischen Reaktion zu beschleunigen, um schließlich den Wirkungsgrad der Schadgasverringerung so weit wie möglich zu steigern.

Die den Reaktor 2 verlassenden Rauchgase werden einem Abscheider zugeführt. Hier wird als Abscheider ein Schlauchfilter 3 verwendet. Auf der Oberfläche der Filterschläuche lagern sich die partikelförmigen Reaktionsprodukte, das überschüssige Additiv und die Flugasche ab. Die Filterschläuche werden periodisch während des Betriebes durch kurze Preßluftstöße abgereinigt. Da das Rauchgas hierbei zwangsläufig nochmals intensiv mit den auf den Filterschläuchen abgeschiedenen überschüssigen Additivpartikeln in Kontakt gebracht wird, findet im Schlauchfilter 3 eine Nachreaktion statt, welche den Wirkungsrad der Schadgasverringerung nochmals deutlich verbessert.

Als Abscheider können zwar auch Elektrofilter oder Zyklone verwendet werden, die im Betrieb wartungsfreundlicher und im Falle der Zyklone auch in der Anschaffung billiger sind, jedoch ist der Abscheide-Wirkungsgrad nicht so hoch wie bei Schlauchfiltern, in denen darüberhinaus eine Nachreaktion stattfindet, wodurch der Wirkungsgrad der Anlage erhöht werden kann.

Im Schlauchfilter 3 werden alle partikelförmigen Stoffe, wie Reaktionsprodukte, Additive, Flugasche und Ruß, abgeschieden. Der Reststaubgehalt des aus dem Schlauchfilter 3 austretenden Reingases liegt unter 20 mg/mn$^3$ und damit deutlich unter dem von der TA-Luft geforderten Grenzwert von 50 mg/mn$^3$.

Über ein Rauchgasgebläse 4 gelangt das gereinigte Rauchgas schließlich zum Kamin 5.

Zur Bevorratung des Additivs dient ein Silo 6, der für einen kontinuierlichen Betrieb von mehreren Tagen, z.B. für einen 14-tägigen Betrieb, ausgelegt sein sollte. Dieses Silo 6 kann bekannte Auflockerungsvorrichtungen besitzen. Eine dosierte Einspeisung des Additivs in das Rauchgas erfolgt über eine Dosiervorrichtung 7, die hier aus einem kleinen Zuführbehälter und einer Dosierschnecke besteht.

Die in den Figuren 1 bis 3 dargestellten Reaktoren 2 weisen alle einen zylinderförmigen, vertikal stehenden Reaktorbehälter 20 auf, in dem eine axial angeordnete, hier am Deckel 21 und am Boden 22 des Reaktorbehälters 20 gelagerte Welle 23 angeordnet ist. Die Länge und der Durchmesser des Reaktorbehälters 20 richten sich nach der mittleren erforderlichen Verweilzeit im wesentlichen des Rauchgases, aber auch des Additives im Reaktor 2. Die Lager 24 und 25 sind außerhalb des Behälters 20 angeordnet, wobei der Wellendurchtritt durch den Deckel 21 bzw. den Boden 22 mittels Dichtungen 26 abgedichtet ist. Auf dem Deckel 22 des Reaktorbehälters 20 ist eine die Welle 23 antreibender Motor, hier ein Elektromotor 27, angeordnet, der von einem Traggerüst 28 getragen wird und dessen Abtriebswelle mit der Welle 23 über eine Kupplung 29 verbunden ist.

Am oberen und am unteren Ende des Reaktorbehälters 20 ist mindestens eine Eintritts- bzw. Austrittsöffnung 30 bzw. 31 für die Gase und Feststoffe, insbesondere die Rauchgase, das Additiv und die Reaktionsprodukte, angeordnet. Gemäß Figuren 2 und 3 sind jeweils zwei Eintritts- und zwei Austrittsöffnungen 30 und 31 angeordnet, von denen jeweils eine mittels eines Deckels 32 verschlossen ist.

Der Reaktorbehälter 20 steht auf einem Sockel 33.

Gemäß Figur 1 sind nun in dem Reaktorbehälter 20 horizontal angeordnete, an der Innenwandung des Behälters 20 festgelegte Einbauten 34, z.B. Siebböden, Lochplatten, bzw. Segmente davon angeordnet. Auf diesen festen Einbauten 34 lagert sich ein Teil des Additivs, insbesondere die gröberen Additivteilchen, ab. An der Welle 23 sind nun gemäß Figur 1 Wischer als durch Welle bewegte Einbauten 35 angeordnet, die hier aus vertikal ausgerichteten Platten bestehen, die sowohl auf der oberen Fläche der festen Einbauten 34, als auch unter der unteren Fläche der darüberliegenden festen Einbauten 34 entlangwischen und das Additiv gegenüber den Einbauten um die Welle 23 herumbewegen. Dabei werden die Additivteilchen aufgewirbelt und in der hier von oben nach unten geführten Rauchgasströmung verwirbelt. Einerseits verursachen insbesondere die festen Einbauten 34, daß sich das im Rauchgasstrom mitgeführte Additiv zum Teil auf diesen Einbauten 34 ablagert, also langsamer durch den Reaktor 2 geführt wird, als die Rauchgase, andererseits vermischen die bewegten Einbauten 35 wieder das Additiv mit dem Rauchgasstrom und sorgen dafür, daß such nur regelbar begrenzte Mengen an Additiv und reagierten Feststoffen auf den festen Einbauten 34 festsetzen können.

Bei der Ausführungsform gemäß Figur 2, in der der Reaktor 2 größer dargestellt ist, als in Figur 1, sind wieder feste, horizontale Einbauten 34 an der Innenwandung des Reaktorbehälters 20 angeordnet, z.B. horizontale Plattensegmente, die sich in der Ebene mit Freiräumen abwechseln, durch die das Rauchgas und auch das Additiv strömen kann. Es können aber auch hier Siebböden oder Lochplatten als feste Einbauten 34 verwendet werden. Zwischen horizontal einander benachbarten festen Einbauten 34 sind nun hier Teilstücke einer wendelförmigen Schnecke als bewegliche Einbauten 35 angeordnet, wobei diese beweglichen Einbauten wieder an der Welle 23 festgelegt sind und von dieser bewegt werden. Die vertikalen Enden dieser Schnecken-Teilstücke streifen wieder einerseits über die obere Fläche des jeweils darunterliegenden Einbaus 34 und an der unteren Fläche des darüberliegenden Einbaus 34 entlang.

Diese beweglichen Einbauten 35, die zwischen den festen Einbauten 34 angeordnet sind, können aber auch schräggestellte oder schraubenflächigartige, gekrümmte Blechflügeln sein.

Durch die beweglichen Einbauten 35 ergibt sich somit der Charakter eines mehrstufigen Rührorgans oder einer unterbrochenen Förderschnecke. Als bewegliche Einbauten 35 können auch Paddelschnecken verwendet werden.

Gemäß der Ausführungsform nach Figur 3 sind in dem Reaktorbehälter 20 keine festen Einbauten 34 vorgesehen. Dafür ist an der Welle 23 eine von unten nach oben durchgehende Schnecke als beweglicher Einbau 5 festgelegt, der von dieser bewegt wird. Anhand dieser Ausführungsform der Erfindung ist dargestellt, daß das Gemisch aus Rauchgas und Additiv auch unten in den Reaktor durch die Eintrittsöffnung 30 eingeführt und oben durch die Austrittsöffnung 31 wieder abgeführt werden kann. Gröbere Additivteilchen lagern sich hier auf dem beweglichen Einbau 35, also der Schnecke, ab und werden immer wieder von dem darüberhinwegströmenden Rauchgas mitgenommen, sodaß sie sich langsam von der unteren Eintrittsöffnung 30 zu der oberen Austrittsöffnung 31 bewegen.

Gemäß einer nicht dargestellten Ausführungsform werden die starren, an der Innenseitenwand des Behälters 21 festgelegten Einbauten 34 durch schräg, horizontal oder vertikal angeordnete Blechflügel gebildet, die sich längs der Achse der Welle 23 mit den an dieser Welle 23 festgelegten und damit beweglichen Einbauten 35 abwechseln. Die beweglichen Einbauten 35 können, je nachdem, wie die festen Einbauten 34 ausgebildet sind, schräg horizontal oder vertikal angeordnete Blechflügel sein, wobei die beweglichen Einbauten 35 nicht parallel zu den festen Einbauten 34 ausgerichtet sein sollten, sondern zumindest mit diesen ausgerichtet sein sollten, um dafür zu sorgen, daß sich auf den Einbauten 34 und auch 35 nicht zuviel Additiv ablagert.

Die Relativbewegung zwischen festen und bewegten Einbauten 34 und 35 läßt nur eine begrenzte Anbackung der Feststoffteilchen zu. Diese begrenzte Anbackung ist sogar erwünscht, da sie den Wirkungsgrad der Reaktion deutlich steigert. Ein Verstopfen des Reaktors 2 wird durch die Selbstreinigung der gegeneinander bewegten Einbauten 34 und 35 vermindert.

Gemäß einer nicht dargestellten Ausführungsform sind die festen Einbauten 34 als Rohre ausgebildet, die durch die Reaktorwand hindurchreichen und auf die Reaktorachse hin gerichtet sind. Diese Rohre besitzen insbesondere kleine Öffnungen, durch die Druckluft in das Reaktorinnere eingeblasen werden kann. Eine solche Einrichtung ist im Prinzip von Filteranlagen als Druckluft-Impuls-Abreinigung bekannt. Die Druckluft kann auch hier pulsweise eingeblasen werden. Mit dieser Einrichtung kann ein zu starkes Anwachsen der Anbackungen und damit ein allmähliches Verstopfen des Reaktors vermieden werden.

Anstelle der zuvor beschriebenen Rohre können auch anders ausgebildete Hohlkörper, durch die Druckluft einblasbar ist, vorgesehen sein.

Die Schrägstellung der beweglichen Einbauten 35 ermöglicht eine Förderung der partikelförmigen Feststoffe, insbesondere die Förderung relativ entgegen dem Rauchgasstrom. Hierdurch kann im Zusammenspiel mit dem regelbaren Antriebsmotor 27 die Verweilzeit des Additivs im Reaktor 2 variiert und somit den Betriebsbedingungen und den Emissionsvorschriften angepaßt werden.

Für die Reaktion wird bisher im stöchiometrischen Verhältnis mit einem Additiv-überschuß von 3:1 gefahren. Durch die innere Rückführung des Additivs kann nun der Additiv-Überschuß je nach weiteren Verfahrensbedingungen bis auf 2:1 gesenkt werden, da das Additiv länger im Reaktor verbleibt, als das Rauchgas.

Während die Verweilzeit des Rauchgases durch den Durchsatz des von einer Feuerungsanlage zugeführten Rauchgases bestimmt wird, kann durch die Ausbildung des Reaktors 2 die Verweilzeit des Additivs im Reaktor durch Regelung der Drehzahl und der Drehrichtung der die beweglichen Einbauten 35 tragenden Welle 23 gesteuert werden. Die Drehzahl der Welle 23 hängt wesentlich von der speziell gewählten Ausführungsform der zusammenwirkenden Einbauten 34 und 35, aber auch von dem stöchiometrischen Verhältnis zwischen Rauchgas und Additiv und anderen Verfahrensbedingungen, wie Feuchte des Gemisches u.ä. ab.

Weist der Reaktor 2 Siebböden als feste Einbauten 34 und Wischer als bewegliche Einbauten 35 auf, so ist eine kleinere Drehzahl der Welle möglich und sinnvoll, als bei Verwendung einer unterbrochenen Schnecke als bewegliche Einbauten 35 und horizontalen, schrägen oder vertikalen festen Einbauten 34. Die Drehzahl bei Verwendung einer durchgehenden Schnecke als beweglicher Einbau 35, wie in Figur 3 dargestellt, ohne feste Einbauten kann sehr unterschiedlich sein und liegt zwischen den Werten der beiden zuvor beschriebenen Ausführungen. Insbesondere hier kann aber auch ein Wechsel der Drehrichtung der Welle 23 zweckmäßig sein.

Die Drehzahl der Welle 23 hängt auch wesentlich von der. Steigung, also der Schräge, der beweglichen und auch der festen Einbauten 34 and 35 ab. Als Anhaltswert für die Drehzahl der Welle 23 kann ein Bereich von 0,5 bis 120 U/min, vorzugsweise von 1 bis 60 U/min angegeben werden. Ein zu verwendender Motor 27, gegebenenfalls mit einem Getriebe versehen, sollte diesen Drehzahlbereich auf die Welle 23 übertragen können.

Der Fachmann ist jedoch in der Lage, nach Kenntnis der speziellen Rahmenbedingungen, wie unter anderem Durchsatz und Reaktorausbildung, den Drehzahlbereich entsprechend einzuschränken, wobei zu wiederholen ist, daß die Drehzahl der Welle 23 erfindungsgemäß im gewissen Rahmen je nach speziellen momentanen Verfahrensbedingungen gesteuert geregelt werden soll.

Selbstverständlich können auch bei dieser Ausbildung einer Anlage zur Rauchgasreinigung mehrere Reaktoren seriell und / oder parallel geschaltet werden. Gleiches gilt für die verwendeten Abscheider 3 und Dosiervorrichtungen 7. Solche seriellen und / oder parallelen Schaltungen einzelner Apparate sind dem Fachmann hinlänglich aus dem Stand der Technik bekannt.

Bezugszeichenliste

1 Mischdüse
2 Reaktor
3 Abscheider, hier Schlauchfilter
4 Rauchgasgebläse
5 Kamin
6 Silo
7 Dosiervorrichtung
20 Reaktorbehälter
21 Deckel von 20
22 Boden von 20
23 Welle
24 Lager von 23
25 Lager von 23
26 Dichtung
27 Antriebsmotor
28 Traggerüst
29 Kupplung
30 Eintrittsöffnung
31 Austrittsöffnung
32 Deckel von 30 bzw. 31
33 Sockel
34 feste Einbauten
35 bewegliche Einbauten

**Patentansprüche**

1. Verfahren zur Reinigung von Rauchgas, welches von einer Feuerungsanlage zugeführt wird, wobei das Rauchgas mindestens mit einem Additiv in einem Reaktor reagiert und das Verhältnis der Verweilzeit des Additivs im Reaktor zur Verweilzeit des Rauchgases im Reaktor geregelt und/oder gesteuert wird, dadurch gekennzeichnet, daß das Rauchgas mit einem pulverförmigen Additiv im stöchiometrischen Verhältnis von maximal 1:3 dosiert gemischt dem Reaktor zugeführt wird.

2. Verfahren nach Anspruch 1, dadurch gekennzeichnet, daß das Verhältnis der Verweilzeit größerer Additivteilchen im Reaktor gegenüber der Verweilzeit kleinerer Additivteilchen im Reaktor geregelt und/oder gesteuert wird.

3. Verfahren nach Anspruch 1 oder 2, dadurch gekennzeichnet, daß das Additiv im Reaktor nochmals mit dem Rauchgas intensiv gemischt wird.

4. Verfahren nach einem der vorhergehenden Ansprüche, dadurch gekennzeichnet, daß das von der Feuerungsanlage kommende, heiße Rauchgas nach Zumischung des Additivs und vor der Zuführung in den Reaktor mit Wasser, unter Verdampfung desselben, gemischt wird.

5. Verfahren nach einem der vorhergegenden Ansprüche, dadurch gekennzeichnet, daß das aus dem Reaktor kommende Stoffgemisch einem Abscheider, vorzugsweise einem Schlauchfilter, zugeführt wird.

6. Verfahren nach dem vorhergehenden Anspruch, dadurch gekennzeichnet, daß das von Feststoffen gereinigte Rauchgas einem Kamin zugeführt wird.

7. Anlage zur Reinigung von Rauchgas, welches von einer Feuerungsanlage zugeführt wird, bei der das Rauchgas in einem Reaktor mindestens mit einem Additiv reagiert, dadurch gekennzeichnet, daß der Reaktor (2) vertikal stehend ausgebildet ist und im Reaktor (2) sich gegenüber dem Reaktorbehälter (20) bewegende Einbauten (35) angeordnet sind.

8. Anlage nach dem vorhergehenden Anspruch, dadurch gekennzeichnet, daß der Reaktorbehälter (20) zylinderförmig ausgebildet ist und in seiner Längsachse eine mittels eines Antriebes (27) drehbare Welle (23) angeordnet ist, die die bewegbaren Einbauten (35) trägt.

9. Anlage nach einem der beiden vorhergehenden Ansprüche, dadurch gekennzeichnet, daß die an der Welle (23) angeordneten Einbauten (34) aus einer durchgehenden Schnecke bestehen.

10. Anlage nach Anspruch 7 oder 8, dadurch gekennzeichnet, daß an der Innenwand des Reaktorbehälters (2) feste, im wesentlichen senkrecht zur Achse der Welle (23) angeordnete Einbauten (34), wie Siebböden, Rohre, angeordnet sind.

11. Anlage nach dem vorhergehenden Anspruch, dadurch gekennzeichnet, daß die bewegbaren Einbauten (35) aus einzelnen, eine unterbrochene Schnecke bildenden, axial zwischen den festen Einbauten (34) angeordneten Blechflügeln bestehen.

12. Anlage nach Anspruch 10, dadurch gekennzeichnet, daß die bewegbaren Einbauten (35) mit den festen Einbauten (34) zusammenwirkende Wischer sind.

13. Anlage nach einem der Ansprüche 9 bis 12, dadurch gekennzeichnet, daß die Einbauten (34) Hohlkörper mit Öffnungen sind, durch die Druckluft in den Reaktor einblasbar ist.

**Claims**

1. Process for cleaning flue gas which is fed from a furnace installation, the flue gas reacting in a reactor with at least one additive and the ratio of the dwell time of the additive in the reactor to the dwell time of the flue gas in the reactor being regulated and/or controlled, characterised in that the flue gas is fed to the reactor mixed with a metered amount of a powdered additive in a stoichiometric ratio of 1:3 at the most.

2. Process according to Claim 1, characterised in that the ratio of the dwell time of coarser particles of additive in the reactor in relation to the dwell time of smaller particles of additive in the reactor is regulated and/or controlled.

3. Process according to Claim 1 or 2, characterised in that the additive is further intensively mixed with the flue gas in the reactor.

4. Process according to one of the foregoing claims, characterised in that the hot flue gas coming from the furnace installation is, after the mixing-in of the additive and before passing to the reactor, mixed with water, vapourising the latter.

5. Process according to one of the foregoing claims, characterised in that the mixture of materials emerging from the reactor is fed to a separator, preferably a tube filter.

6. Process according to the foregoing claim, characterised in that the flue gas, cleaned of solids, is passed to a chimney.

7. Installation for cleaning flue gas which is supplied from a furnace installation, in which the flue gas reacts in a reactor with at least one additive, characterised in that the reactor (2) is of upstanding vertical construction and there are arranged within the reactor (2) inserts (35) which are movable with respect to the reactor vessel (20).

8. Installation according to the foregoing claim, characterised in that the reactor vessel (20) is of cylindrical shape and there is arranged on its longitudinal axis a shaft (23) rotated by means of a drive (27) and carrying the movable inserts (35).

9. Installation according to one of the two foregoing claims, characterised in that the inserts (34) arranged on the shaft (23) comprise a continuous screw.

10. Installation according to Claim 7 or 8, characterised in that fixed inserts (34), such as sieve floors, tubes, arranged substantially perpendicular to the axis of the shaft (23), are arranged on the inside wall of the reactor vessel (2).

11. Installation according to the foregoing claim, characterised in that the movable inserts (35) comprise individual sheet metal blades arranged axially between the fixed inserts (34) and forming an interrupted screw.

12. Installation according to Claim 10, characterised in that the movable inserts (35) are wipers cooperating with the fixed inserts (34).

13. Installation according to one of Claims 9 to 12, characterised in that the inserts (34) are hollow bodies having openings through which compressed air can be blown into the reactor.

**Revendications**

1. Procédé d'épuration de gaz de fumée provenant d'une installation de chauffe, le gaz de fumée réagissant au moins avec un additif dans un réacteur et le rapport de la durée de séjour de l'additif dans le réacteur à la durée de séjour du gaz de fumée dans le réacteur étant réglé et/ou commandé, caractérisé en ce que le gaz de fumée est amené au réacteur en mélange avec un additif pulvérulent et dosé selon un rapport stœchiométrique de 1/3 au maximum.

2. Procédé selon la revendication 1, caractérisé en ce que le rapport de la durée de séjour de particules plus grandes d'additif dans le réacteur à la durée de séjour de particules plus petites d'additif dans le réacteur est réglé et/ou commandé.

3. Procédé selon l'une quelconque des revendications 1 et 2, caractérisé en ce que l'additif dans le réacteur est mélangé une nouvelle fois énergiquement avec le gaz de fumée.

4. Procédé selon l'une quelconque des revendications 1 à 3, caractérisé en ce que le gaz de fumée chaud venant de l'installation de chauffe est mélangé avec de l'eau, tout en évaporant celle-ci, et ce, après mélange avec l'additif et avant l'introduction dans le réacteur.

5. Procédé selon l'une quelconque des revendications 1 à 4, caractérisé en ce que le mélange de matières sortant du réacteur est conduit à un séparateur, de préférence un filtre à manche.

6. Procédé selon l'une quelconque des revendications 1 à 5, caractérisé en ce que le gaz de fumée débarrassé des matières solides parvient à une cheminée.

7. Installation d'épuration de gaz de fumée émanant d'une installation de chauffe, dans laquelle le gaz de fumée réagit au moins avec un additif dans un réacteur, caractérisée en ce que le réacteur (2) est réalisé pour être monté verticalement et en ce que des pièces internes (35) mobiles par rapport au récipient (20) du réacteur (2) sont disposées dans ce dernier.

8. Installation selon la revendication 7, caractérisée en ce que le récipient (20) du réacteur est conçu cylindriquement et en ce qu'un arbre (23) tournant grâce à une commande (27) est pourvu des pièces internes mobiles (35) et est disposé dans l'axe longitudinal du récipient (20).

9. Installation selon l'une quelconque des revendications 7 et 8, caractérisée en ce que les pièces internes (34) prévues sur l'arbre (23) se composent d'une vis sans fin continue.

10. Installation selon l'une quelconque des revendications 7 et 8, caractérisée en ce que des pièces internes fixes (34), montées en substance perpendiculairement à l'axe de l'arbre (23), par exemple, des fonds perforés ou des tubes, sont disposées sur la paroi intérieure du récipient (20) du réacteur.

11. Installation selon l'une quelconque des revendications 7 à 10, caractérisée en ce que les pièces internes mobiles (35) se composent de différentes ailettes de tôles formant une vis sans fin interrompue et situées axialement entre les pièces internes fixes (34).

12. Installation selon la revendication 10, caractérisée en ce que les pièces internes mobiles (35) sont des éléments d'essuyage agissant simultanément avec les pièces internes fixes (34).

13. Installation selon l'une quelconque des revendications 9 à 12, caractérisée en ce que les pièces internes (34) sont des corps creux pourvus d'ouvertures par lesquelles l'air comprimé est insufflable dans le réacteur.

Fig. 1

EP 0 203 430 B1

Fig.2

Fig.3